# EUROPÄISCHE PATENTSCHRIFT

(11) **EP 2 593 351 B1**
(45) Veröffentlichungstag und Bekanntmachung des Hinweises auf die Patenterteilung: **30.12.2015**
(21) Anmeldenummer: 12718903.3
(22) Anmeldetag: 31.03.2012
(51) Int. Cl.: B62J 6/06, B62L 1/00, H02K 1/14, H02K 7/18

(54) **VORRICHTUNG ZUR BERÜHRUNGSLOSEN STROMERZEUGUNG, INSBESONDERE FAHRRADDYNAMO, FAHRZEUGBELEUCHTUNGSANLAGE UND FAHRRAD**
CONTACTLESS CURRENT GENERATOR, ESPECIALLY DYNAMO, FOR BICYCLE AND FOR LIGHTING SYSTEMS OF VEHICLE
GENERATEUR DE COURANT, ENPARTICULIER DYNAMO, POUR BICYCLETTE ET SYSTÈME D' ÉCLAIRAGE DE VEHICULE

(30) Priorität: 01.07.2011 DE 202011102664 U; 20.10.2011 DE 202011107060 U
(43) Veröffentlichungstag der Anmeldung: 22.05.2013
(73) Patentinhaber: Magnic Innovations GmbH & Co. KG, 33829 Borgholzhausen (DE)
(72) Erfinder: STROTHMANN, Dirk, 33829 Borgholzhausen (DE)
(74) Vertreter: Busse & Busse
(86) Internationale Anmeldenummer: PCT/EP2012/001431
(87) Internationale Veröffentlichungsnummer: WO 2013/004320

(56) Entgegenhaltungen:
- EP-A1- 2 323 242
- WO-A1-2010/145663
- DE-A1- 2 642 682
- DE-U1- 29 822 343

## Beschreibung

Die vorliegende Erfindung betrifft eine Vorrichtung zur berührungslosen Stromerzeugung, insbesondere Fahrraddynamo, an einem drehbaren Gegenelement, insbesondere Radfelge, mit zumindest einem bewegbar gelagerten, wenigstens einen Magneten aufweisenden Rotorelement, und zumindest einer Spule, in deren wenigstens einer Wicklung durch den mit dem Rotorelement bewegten Magneten ein Strom induzierbar ist, der zum Betrieb eines Verbrauchers verwendbar ist, wobei das Rotorelement durch magnetische Wechselwirkung mit dem Gegenelement bewegbar ist. Des Weiteren betrifft die Erfindung eine Fahrzeugbeleuchtungsanlage mit einer entsprechenden Vorrichtung sowie ein Fahrrad, welches eine solche Fahrzeugbeleuchtungsanlage aufweist.

Es gibt eine Vielzahl unterschiedlicher Dynamos zur Stromerzeugung für Fahrradlampen. Hierbei kann es sich beispielsweise um Seitenläuferdynamos bzw. Rollendynamos handeln, deren Reibrad an der Seitenwand bzw. auf der Lauffläche des Reifens mitläuft. Der Nachteil dieser Dynamos liegt im schlechten Wirkungsgrad und der deutlichen Bremswirkung durch den nötigen hohen Anpressdruck am Reifen sowie in der Wetterabhängigkeit bei Matsch, Nässe, Schnee sowie der oft störenden Geräuschentwicklung.

Darüber hinaus sind z.B. Nabendynamos bekannt.

Nabendynamos sind direkt in die Radnabe integriert und haben in der Regel ein Getriebe. Sie sind wetterunabhängig und liefern eine gute Stromleistung, haben jedoch den Nachteil des höheren Gewichts, was insbesondere bei sportlichen Rädern ein Ausschlusskriterium ist, und sind nur unter großem Aufwand durch Austausch der Radnabe nachrüstbar.

Klassische berührungslose Dynamos erfordern zusätzliche Magneten oder Magnetringe in den Speichen, die in fest montierten Spulen eine Spannung induzieren. Sie laufen berührungslos und damit geräuschfrei und haben kaum Bremswirkung. Um eine ausreichende Stromversorgung zu erzielen müssen jedoch viele zusätzliche Magneten manuell in den Speichern verankert werden, was insbesondere bei sportlichen Rädern ebenfalls wieder ein Ausschlusskriterium darstellt. In der WO2001/033700 A1 ist ein Fahrraddynamo offenbart, bei dem entsprechenden Magnete in den Speichen der Felge angeordnet sind und ein Rotorelement wenigstens einen Magneten aufweist, welcher mit den Magneten in der Speiche wechselwirkt.

Offenlegungsschrift DE 26 42 682 offenbart ein Verfahren zum Erzeugen elektrischer Hilfenergie durch Wirbelströme. Der Obergriff vom Anspruch 1 stützt sich auf Begriffen aus WO 2001/033700 ab.

Darüber hinaus wurden Generatoren entwickelt, bei denen ein oder mehrere Magnete innerhalb einer an Rahmen oder Radgabel befestigten Komponente dadurch in Bewegung versetzt werden, dass am Laufrad (an Felge oder Speichen) angebrachte Magneten oder Metallstücke beim Passieren der Komponente eine gerichtete magnetische Wechselwirkung herstellen. Die in Bewegung versetzten Magnete in der festen Komponente erzeugen dann in einer anliegenden Spule per Induktion einen Stromfluss. Alle diese Vorrichtungen haben den Nachteil einer zusätzlichen Anbringung von Magnet oder Metallkomponenten am Laufrad (z.B. WO 2001/033700 A1).

Es ist Aufgabe der vorliegenden Erfindung, eine Vorrichtung zur Stromerzeugung insbesondere für Fahrräder zu schaffen, die einfach und kostengünstig herstellbar und ohne zusätzlich an oder in den Felgen zu montierende Magnete oder metallische Elemente auskommt.

Die Aufgabe wird gelöst durch einen Gegenstand gemäß Anspruch 1 sowie durch die Gegenstände der Ansprüche 12 und 17. Vorteilhafte Weiterbildungen sind den auf diese Ansprüche rückbezogenen Unteransprüchen sowie der nachfolgenden Figurenbeschreibung zu entnehmen.

Erfindungsgemäß ist vorgesehen, dass Rotorelement und Gegenelement unterschiedliche Achsenverläufe aufweisen und das Rotorelement in einer Wirkposition zur Erzeugung zumindest eines wirbelstrombasierten Magnetfelds in dem eine ununterbrochene Kreisbahn ausbildenden und leitfähigen Gegenelement ausgebildet ist, dergestalt, dass durch kontinuierliche Relativbewegung zwischen Gegenelement und Rotorelement kontinuierlich zueinander gegenläufige Wirbelstromfelder mit zueinander gegenpoligen Magnetfeldern im Gegenelement induziert werden und so das Rotorelement unter Ausbildung eines Wirbelstromgetriebes mit dem Gegenelement bewegt wird.

Bei der Erfindung wird somit nur ein stromleitendes Gegenelement, insbesondere eine Radfelge, als Getrieberad kurzfristig magnetisiert und magnetisch mit einem einen Magneten aufweisenden Rotorelement, umfassend beispielsweise einen Permanent- oder Elektromagneten, magnetisch gekoppelt. Hierbei ist als Wirkposition der Abstand zwischen den beiden dann als Getrieberäder fungierenden Teilen Rotorelement und Gegenelement so gering auszuwählen, dass das Magnetfeld des Magneten des Rotorelements bei Drehbewegungen des Gegenelements ausreichend große Wirbelströme im diesem beispielsweise als Metallrad ausgebildeten Gegenelement induzieren kann. Bei Verwendung nachbeschriebener Magneten können ohne Weiteres Abstände von mehr als 4 mm vom Gegenelement beibehalten werden.

Die im insbesondere als paramagnetisch auszuwählenden Gegenelement induzierten Wirbelströme erzeugen temporäre Magnetfelder, die zur magnetischen Verzahnung der beiden Elemente Gegenelement und Rotorelement zur Ausbildung als Wirbelstromgetriebe erforderlich sind. Hierdurch wird jeweils nur eine punktuelle Erwärmung durch induzierte Wirbelströme im Gegenelement bewirkt, die zu einer vernachlässigbaren Aufheizung führen, insbesondere da im weiteren Drehverlauf wieder eine Abkühlung erfolgen kann. Die durch Wirbelströme auftretenden Wärmeverluste werden in Kauf genommen, da die Vorteile der berührungslosen Kraftübertragung mit nur temporär anliegender, jedoch kontinuierlich erfolgender Magnetverzahnung (anstelle einer aufwendigen Magnetnachrüstung) überwiegen. Eine erfindungsgemäße Vorrichtung arbeitet berührungslos und ist dementsprechend leise. Die magnetische Kopplung ist ebenfalls unabhängig einer durch Schnee, Eis, Schmutz oder Regen verminderten Reibung. Eine Kapselung des Rotorelements in einem Gehäuse ist ohne Weiteres möglich, so dass die Stromerzeugung vollständig unabhängig von Schnee, Matsch oder dgl. erfolgen kann.

Vorzugsweise weist das Rotorelement eine Mehrzahl von Magneten, insbesondere zumindest sechs Magnete auf. Die von mehreren Magneten erzeugten Magnetfelder des Rotorelements, die mit den wirbelstrombasierten Magnetfeldern des Gegenelements quasi miteinander verzahnen können, sind vorzugsweise in einer Umfangsrichtung um das Rotorelement betrachtet symmetrisch ausgebildet.

Das Rotorelement kann beispielsweise schwenkbar gelagert sein und gegen die Kraft eines Kraftspeichers bewegbar sein. Vorzugsweise ist das Rotorelement jedoch dreh- oder rotierbar um eine Achse gelagert, wobei die Magnete mit ihrer Nord/Südausrichtung radial zur Drehachse angeordnet sind. Ein regelmäßiger Aufbau der Magnetfelder des Rotorelements ist hierbei für eine optimale Stromerzeugung sinnvoll. Insbesondere die Nord-Süd-Ausrichtung von auf einer Senkrechten quer zur Drehachse befindlichen Magneten sollte identisch sein. Dies ist insbesondere bei Anzahlen von Magneten der Fall, die das Doppelte einer ungeraden Zahl sind (6,10,14, ..., 2+n*4, etc. Magnete, mit n = 1,2,3,...).

Die Magnetfeldlinie des Magneten, der am nächsten an der Felge anliegt, durchdringt in einer Wirkposition das Gegenelement, insbesondere die Felge eines Fahrrads und induziert Wirbelstromfelder in der Felge. Hierdurch wiederum werden Magnetfelder erzeugt. Das in Felgendrehrichtung vorliegende Magnetfeld übt dann eine magnetische Anziehkraft auf den Magneten auf, auf den somit in Richtung der Bewegung der Felge eine Kraft ausgeübt wird, was in einer Drehbewegung des Magnetrades resultiert. Für den vorteilhaften Fall, dass die benachbarten Magneten auf dem Rotorelement entgegengesetzte Polaritäten aufweisen, verstärkt sich dieser Effekt noch dadurch, dass auch die Wirbelstrom induzierten Magnetfelder unterschiedlich polarisiert sind. Hierdurch erfolgt noch eine zusätzliche Abstoßung des vorhergehenden Magnetfeldes in Drehrichtung der Felge, so dass das Felgenrad einerseits als Getrieberad und andererseits das Rotorelement als weiteres Getrieberad zur Ausbildung eines Wirbelstromgetriebes gut miteinander gekoppelt sind.

Hierbei ist der mindestens eine Magnet/sind insbesondere alle Magnete des Rotorelements so ausgebildet, dass als Gegenelement eine zumindest im Wesentlichen aus insbesondere Magnesium, Aluminium, Stahl oder einem leitfähigen Kunststoffmaterial, bestehende Felge eines Fahrradreifens verwendbar ist. Eine solche Felge, die eine kontinuierliche Kreisbahn ausbildet und in der Regel einstückig aufgebaut ist, ist ohnehin an einer Vielzahl der Fahrräder vorhanden, so dass eine erfindungsgemäße Vorrichtung ohne Weiteres nachrüstbar als Fahrraddynamo eingesetzt werden kann. Hier weist die Vorrichtung entsprechende Kontaktierungen zum Leiter der Spule auf.

Vorzugsweise können Neodym-Permanentmagnete verwendet werden, deren magnetische Feldstärke in einem Bereich von 750 bis 1100 kA/m, insbesondere in einem Bereich von 850 bis 1000 liegt. Diese sind bei kleinen Abmessungen ausreichend stark. Es können beispielsweise flache, rechteckige Quader bildende Magnete geringer Größe bei Kantenlängen kleiner 2 cm auf einem Sechskantträger aus Metall entlang verteilt aufgesetzt werden, so dass das Rotorelement mit sechs Magneten bestückt ist. Ein vorteilhafter Neodym-Magnet weist Kantenlängen von 20 x 10 x 5 mm auf.

Ein solches Magnetrad eines Rotorelements kann dann dicht (z.B. in einem Bereich von 0,4 mm bis z.B. 10 mm) an der Felgenseite positioniert werden, um beispielsweise bei einer Alu-Felge wirbelstrombasierte Magnetfelder und durch die Bewegung in der Spule eine Spannung bzw. bei geschlossenem Stromkreis einen Strom zu erzeugen. Die erfindungsgemäße Vorrichtung weist hierfür entsprechende Befestigungselemente auf.

Im Gegensatz zu im Stand der Technik bekannten Generatoren, bei denen unterbrochene Drehmomente basierend auf magnetischer Anziehung von zusätzlich am Rad anzubringenden unterbrochenen Metallelementen oder Magneten wirken, wird bei der Erfindung bei Felgenbewegung ein kontinuierliches Drehmoment auf das Magnetrad bzw. Rotorelement ausgeübt. Neben der einfacheren Bauweise, durch Verwendung der vorhandenen Radfelge als Getriebe-Bestandteil werden deutlich höhere Drehmomente mit entsprechend größerer Stromausbeute erreicht.

Beispielsweise ist bei einem maximalen Energieprodukt von 306 kJ/m³ bei zwei beidseits der Felge angebrachten Neodym-Permanentmagnetringen aus jeweils sechs vorbeschriebenen Magneten einer Dicke von 5 mm (mit Maßen von 20 x 10 x 5 mm) und einer Aluminiumradfelge, die mit ca. 20 km/h beschleunigt wird, bei einem Abstand von 5 mm bis 10 mm zwischen Felge und Rotorelement eine Ausgangsleistung von 3 W zu erzielen.

Die Drehzahl des Magnetringes ergibt sich aus der Drehzahl der Felge und dem Verhältnis des Felgenumfangs zum "virtuellen" Rotorelementumfang, der sich aus dem Abstand der Drehachse zur Felge ergibt. Die Drehzahl des Rotorelements ist ggf. noch reduziert in Abhängigkeit eines Schlupfes, der von Magnetfeldstärke, Radabstand und Drehgeschwindigkeit abhängt.

Die Ausbildung der Wirbelstromfelder ist insbesondere dann verbessert, wenn die Magnete des Rotorelements zumindest teilweise und vorzugsweise außenseitig beabstandet voneinander und regelmäßig entlang des Umfangs eines beispielsweise metallischen Trägerelements verteilt sind.

In einer Ausbildung der Erfindung kann die erfindungsgemäße Vorrichtung mit einer Wicklung versehen sein, die Teil eines von dem Rotorelement antreibbaren Generators ist. Hierbei treibt dann das Rotorelement mit einem Teil seiner Magneten eine Welle an, die ihrerseits wieder mit einem Magneten bestückt ist, um in einem Generator herkömmlicher Art einen Strom zu erzeugen.

Besonders vorteilhaft ist jedoch eine Ausbildung der Erfindung, bei der die Wicklung der Spule vollständig um das Rotorelement herumführt und insbesondere Wicklung und Rotorelement gemeinsam in einem Gehäuse gekapselt sind. Hierbei wird einerseits die Vorrichtung einfacher gehalten, sie baut kompakter und hat aufgrund gegenüber herkömmlichen Dynamos geringerer Lagerverluste einen höheren Wirkungsgrad. Insbesondere kann die Wicklung durch einen einzigen Leiter ausgebildet werden, wobei jedoch auch andere Wicklungsformen denkbar sind. Insbesondere können Teile eines Leiters als gegeneinander angewinkelte Wicklungen ausgebildet sein, wobei beide um das Rotorelement herumführen.

Eine einfache und wirkungsvolle Anordnung einer Spule weist Wicklungen auf, die bei einer 360° überstreichenden Wicklung eine im Wesentlichen parallel zur Rotorachse verlaufende Ebene ausbilden. Hierdurch baut die erfindungsgemäße Vorrichtung relativ klein auf und kann bei einer Anordnung, in der sowohl die Drehachse als auch die Spulenebenen in etwa parallel zu einer von dem Gegenelement ausgebildeten Ebene liegen, dicht an diesem angeordnet werden. Anstelle einer Fahrradfelge als Gegenelement kann es sich bei der erfindungsgemäßen Vorrichtung auch um eine solche handeln, die einen stromleitenden, kreisförmigen und geschlossen Teil eines Rades eines anderes Fahrzeugs aufweist.

In einer weiteren Ausbildung der Erfindung weist die Vorrichtung einen insbesondere als Kondensator und Akkumulator ausgebildeten Energiespeicher auf, wobei die Vorrichtung zur Speicherung von elektrischer Energie während des Betriebs der Vorrichtung und zur nachfolgenden Abgabe der Energie ausgebildet ist.

Die eingangs gestellte Aufgabe wird ebenfalls durch eine Fahrzeugbeleuchtungsanlage, insbesondere eine Fahrradbeleuchtungsanlage, gelöst, die eine mit vor- oder nachbeschriebenen Merkmalen versehene Vorrichtung zur Stromerzeugung sowie zumindest ein mit der Spule leitungsmäßig verbundenes Leuchtmittel aufweist. Dieser Fahrzeugbeleuchtungsanlage kommen die zugehörigen und ebenfalls vor- oder nachstehend aufgeführten Vorteile zu.

Die vorliegende Vorrichtung ist besonders kompakt und energieeffizient, wenn das bzw. wenigstens ein Leuchtmittel an einem insbesondere die Spule einfassenden Gehäuse der Vorrichtung angeordnet ist, wobei die Stromversorgung des Leuchtmittels über kurz und entsprechend gering verlustbehaftete Leitungen realisiert werden kann. Das Leuchtmittel kann direkt in das Gehäuse integriert oder über Träger/Befestigungsmittel in wenigstens einer oder verschiedenen Positionen an diesem festlegbar mit der Vorrichtung verbunden sein.

Insbesondere kann die gesamte Vorrichtung bestehend aus Generator, Stromversorgung und Leuchtmittel vollständig in einem Gehäuse gekapselt werden und somit extrem unanfällig gegenüber äußeren Beanspruchungen ausgestaltet werden.

Vorzugsweise ist die erfindungsgemäße Vorrichtung mit zwei Leuchtmitteln versehen, wobei die insbesondere wenigstens eine Diode umfassenden Leuchtmittel in separaten Stromkreisen mit unterschiedlichen Durchlassrichtungen angeordnet sind, dergestalt, dass die Stromkreise bei einem vom Rotorelement in der Spule induzierten Wechselstrom abwechselnd strombeaufschlagt sind. Der durch das innerhalb der Spule rotierende Rotorelement und hierbei in den Wicklungen induzierte Wechselstrom wird dazu genutzt, zwei bezüglich der Durchlassrichtung separate Stromkreise zu versorgen. In einer besonders vorteilhaften weil einfachen und doch wirkungsvollen Variante sind die Leuchtmittel beide als Dioden ausgebildet, deren Durchlassrichtungen in den Stromkreisen entgegengesetzt sind. Die Frequenz des Wechselstroms ist hierbei abhängig von der Drehgeschwindigkeit des Rotorelements, welche wiederum abhängig ist von dem Übersetzungsverhältnis des aus den beiden insbesondere drehbaren Teilen gebildeten Magnetgetriebes. Bei vorteilhaften Übersetzungsverhältnissen von 1:40 bei einem Rad mit etwa 2 m Umfang und einem Magnetring von etwa 6 cm bis 8 cm Umfang können somit Wechselstromfrequenzen deutlich oberhalb der für ein Auge auslösbaren Frequenz von 20 Hz erreicht werden. Der effektive Umfang des Rotorelements ergibt sich hierbei aus dem Radius der durch die von dem rotierenden Rotorelement beschriebene äußere Kreisbahn einschließlich zumindest eines Teils des zum Gegenelement vorhandenen Luftspalts. Vorteilhafterweise liegen die Frequenzen in einem Bereich von 50 hz bis 150 hz. Es wird somit durch die wechselnden Magnetfelder des rotierenden Magnetrings/Rotorelements eine zur Lichterzeugung ausreichende Wechselspannung geliefert. Die bei Verwendung einer nachgelagerten Generatoreinheit anfallenden zusätzlichen Reibungsverluste entfallen.

Insbesondere bei einer geradzahligen Anordnung von Magneten, bei der die Nord-Süd-Ausrichtung bzw. Polarität auf einer Achse quer zur Drehachse des Rotorelements befindlichen Magneten identisch sind, ergibt sich ein hoher Wirkungsgrad.

Anstelle einer Ausnutzung des Wechselstroms in zwei Stromkreisen können diese natürlich auch in einem einzigen Stromkreis verwendet werden. Ergänzend kann eine erfindungsgemäße Fahrzeugbeleuchtungsanlage bzw. eine erfindungsgemäße Vorrichtung einen im Stromkreis vorhandenen und insbesondere der Spule nachgeschalteten Gleichrichter aufweisen, der den Strom der Spule gleich richtet.

Vorteilhafterweise ist die erfindungsgemäße Fahrzeugbeleuchtungsanlage auch mit einer Trageinheit versehen, durch die der Abstand des Rotorelements zum Gegenelement variierbar ist. Eine solche Variation kann vorzugsweise durch die Verschiebung der Trageinheit innerhalb einer Außenhülle der Fahrzeugbeleuchtungsanlage erfolgen. Durch Änderung des Abstands können gezielt Änderungen in der Lichtausbeute aufgrund geänderter induzierter Spannungen erzielt werden.

Die eingangs gestellte Aufgabe wird ebenfalls durch ein Fahrrad gelöst, welche eine Fahrzeugbeleuchtungsanlage wie vor- oder nachbeschrieben aufweist und welches als Gegenelement eine Felge besitzt.

Es gibt eine Mehrzahl von Befestigungsmöglichkeiten einer erfindungsgemäßen Vorrichtung an einem Fahrrad. Hierbei ist insbesondere die Vorrichtung zur Stromerzeugung an einer Gabel und/oder an einer Bremse des Fahrrads angeordnet, insbesondere dergestalt, dass durch die Annäherung des Rotorelements an die Felge während einer Betätigung der Bremse der in der Spule induzierte Strom unter Verstärkung der Lichtleistung vergrößert wird. Durch die Verringerung des effektiven Umfangs des Rotorelements aufgrund dessen Annäherung an die Felge wird dessen Umdrehungszahl entsprechend der veränderten Übersetzungsverhältnisse erhöht, was zusätzlich zu einer Verringerung des Schlupfes zwischen den beiden drehenden Elementen, nämlich der Felge und dem Rotorelement führt, so dass eine höhere Gesamtleistung erzielt wird und ein Aufleuchten der Lampe erreicht wird.

Die Verwendung eines roten Bremslichts als Leuchtmittel an der Hinterradfelge eines erfindungsgemäßen Fahrrads ermöglicht somit das verstärkte Aufleuchten des Bremslichtes während des Bremsens des Fahrrads.

Hierfür kann die erfindungsgemäße Vorrichtung zusätzlich zum Bremsklotz an der Bremsklotzaufnahme befestigt sein. Ergänzend oder alternativ zu einer direkten Anordnung am Bremsklotz kann die Vorrichtung zur Stromerzeugung am Bremsschuh oder innerhalb des Bremsschuhs angeordnet sein und so auch bei Austausch des Bremsklotzes unverändert in Position verbleiben. Gerade die Anordnung am oder (zumindest teilweise) innerhalb des Bremsschuhs führt zu dem vorteilhaften Verhalten der Beleuchtungsanlage während eines Bremsvorgangs. Entsprechend kann eine Fahrradbeleuchtungsanlage einen Bremsschuh aufweisen, in den die wesentlichen Mittel zur Stromerzeugung der erfindungsgemäßen Vorrichtung bereits integriert sind und der die Bremsschuhe herkömmlicher Bremsanlage ersetzen kann.

Ebenfalls ist es möglich, die Vorrichtung zur Stromerzeugung am Befestigungssockel einer Cantilever oder V-Brake-Bremse zu befestigen.

Eine Verstärkung der Kopplung von Gegenelement und Rotorelement kann generell dadurch erzeugt werden, dass bei einem erfindungsgemäßen Fahrrads beidseits der Felge entsprechende Rotorelemente angeordnet sind, die wiederum einen Strom in zugehörigen Spulen induzieren und in einer sich wechselseitig verstärkenden magnetischen Wirkposition angebracht sind. Hierdurch können bei entsprechenden Magneten die in der Felge induzierten Wirbelströme verstärkt werden, was ebenfalls zu einer verbesserten Kopplung führt.

Durch hohe Drehzahlen werden bei den erfindungsgemäßen Gegenständen des Weiteren die induzierten Wirbelströme und resultieren Magnetfelder in dem Rad/der Felge verstärkt, so dass der Schlupf auch aus diesem Grund mit zunehmender Geschwindigkeit deutlich abnimmt.

Insbesondere die Anbringung in Hufeneisenform an der Bremsaufnahme herkömmlicher Radgabeln, so dass wie vorbeschrieben zwei sich in ihrer Wirkung verstärkende Rotorelemente an den gegenüberliegenden Felgenflanken verlaufen, ist sehr vorteilhaft. Durch die Hufeisenform wird eine erschütterungssichere Befestigung erreicht, wobei die Leuchtmittel fest oberhalb des Reifens angeordnet werden können.

Generell kann ein erfindungsgemäßes Fahrrad mit zwei entsprechenden Beleuchtungsanlagen ausgestattet sein, wobei für eine Verwendung als Rücklicht auch schwächere Magneten mit schwächeren Leuchtmitteln verwendet werden können.

Eine erfindungsgemäße Beleuchtungsanlage, die bei einem Bremsvorgang aufleuchtet, kann auch elektrisch gekoppelte, an einer Vorderrad- wie auch einer Hinterradbremse angeordnete Vorrichtungen zur Stromerzeugung aufweisen. Sobald der Strom einer Vorrichtung durch Betätigung der Bremse schlagartig und anders als beim langsamen Beschleunigen des Fahrrades ansteigt, wird der Strom verstärkt auf den zur Rückleuchte führenden Stromkreis geleitet. Hierfür sind als Schaltelemente einfache Komparatoren und Transistoren verwendbar.

Die vor- und nachbeschriebenen Ausführungsbeispiele stellen eine Verbesserung gegenüber bislang bekannten Vorrichtungen wie Fahrraddynamos dar, da sie eine berührungslose (somit geräuschslose), wetterunabhängige, reibungsarme (und somit energieeffiziente) Energieversorgung ohne im oder am Laufrad anzubringende Zusatzkomponenten gewährleistet. Auch die Nachrüstung eines bestehenden Seitenläuferdynamos durch Aufsetzen eines geeigneten Magnetringes und Positionierung in geringem Felgenabstand anstatt direkt am Reifen reibend ist erfindungsgemäß möglich.

Weitere Vorteile und Einzelheiten der Erfindung sind der nachfolgenden Figurenbeschreibung zu entnehmen. In den schematischen Abbildungen der Figuren zeigt:
- Fig. 1: eine perspektivische Darstellung einer erfindungsgemäßen Vorrichtung in einer Teilansicht,
- Fig. 2: eine Detailansicht des Gegenstands nach Fig. 1,
- Fig. 3: einen weiteren erfindungsgemäßen Gegenstand in einer Teilansicht,
- Fig. 4: eine weitere Detailansicht des Gegenstands nach Fig. 1,
- Fig. 5: eine Veranschaulichung des zugrunde liegenden Erfindungsgedankens,
- Fig. 6: eine weitere erfindungsgemäße Vorrichtung,
- Fig. 7: eine weitere erfindungsgemäße Vorrichtung,
- Fig. 8: einen Teil einer erfindungsgemäßen Vorrichtung,
- Fig. 9: einen weiteren Teil einer erfindungsgemäßen Vorrichtung,
- Fig. 10: eine Teilansicht einer weiteren erfindungsgemäßen Vorrichtung.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

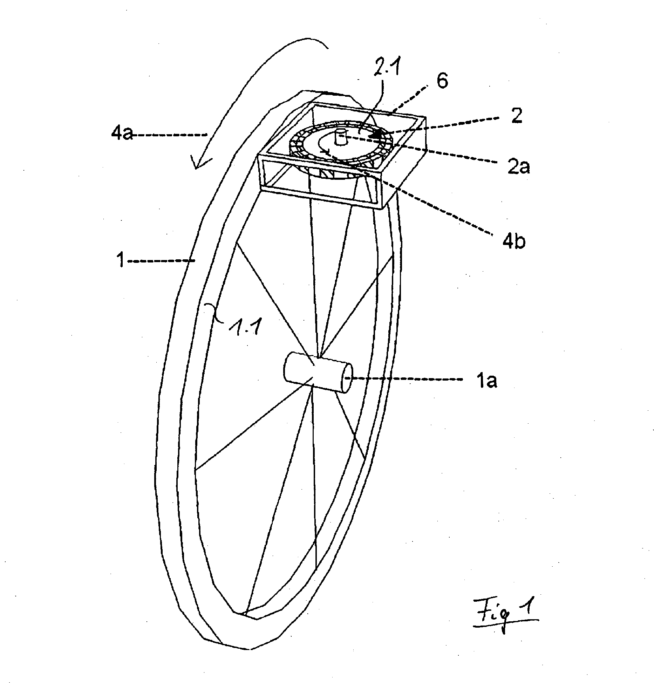

Die erfindungsgemäße Vorrichtung nach Fig. 1 weist ein Gegenelement 1 auf, welches mit einem drehbar gelagerten Rotorelement 2 koppelt. Hierfür ist das Gegenelement 1 als Felge ausgebildet mit einer seitlichen Fläche 1.1, die eine ununterbrochene Kreisbahn ausbildet. Die Felge 1 ist leitfähig ausgebildet, beispielsweise aus Aluminium.

Das Rotorelement 2 weist einen Träger 2.1 auf, auf dem umfangsseitig eine Vielzahl von nachfolgend noch näher beschriebenen Magneten angeordnet ist. Der Träger 2.1 ist mit den Magneten auf einer Achse 2a drehbar gelagert. Eine Drehbewegung in Richtung 4a des Gegenelements/der Felge 1 bewirkt eine gleichgerichtete Drehbewegung des mit Magneten besetzten Rotorelements 2 in Richtung 4b. Das Rotorelement 2 dieses nun als Wirbelstrommagnetgetriebe wirkenden Gegenstands ist in einem Gehäuse/einer Box 6 vollständig nach außen beispielsweise gegen Witterungseinflüsse gekapselt. Keine empfindlichen, beweglichen Teile stehen im direkten Kontakt mit der Umgebung. Die Drehachse, die innerhalb der Achse 2a verläuft, steht senkrecht auf einer Geraden durch die Felgenachse1 a.

Das Rotorelement 2 befindet sich in einer Wirkposition zur Erzeugung einer Mehrzahl von wirbelstrombasierten Magnetfeldern in dem Gegenelement 1. Nicht gezeigt sind die Spule und ein Leuchtmittel, welches durch den in der Spule induzierten Strom (aufgrund der dort induzierten Spannung) betreibbar ist.

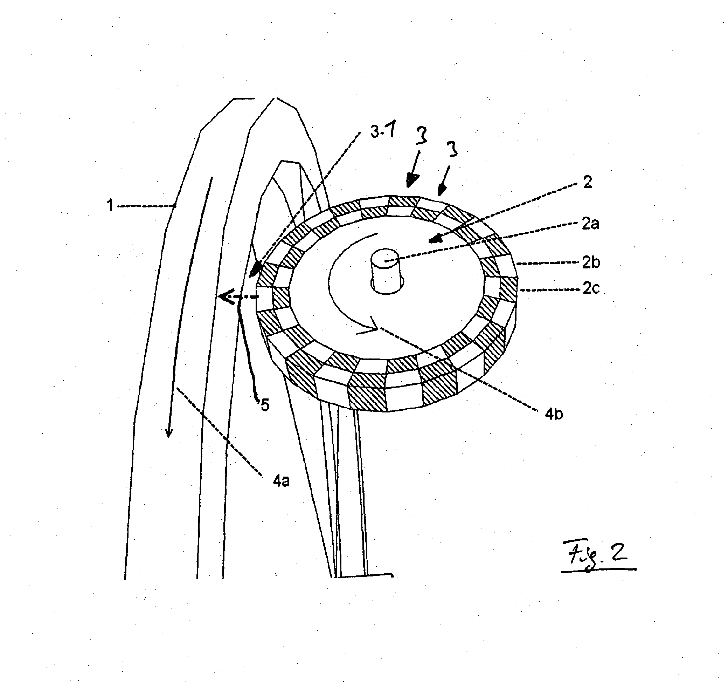

Fig. 2 ist eine Teilansicht des Gegenstands nach Fig. 1, wobei die Box 6 weggelassen wurde. Das Rotorelement 2 ist von der Seitenfläche 1.1 des Gegenelements 1 über einen kleinen Spalt 3.1 getrennt. Nordpole 2b (nicht schraffiert) und Südpole 2c (schraffiert) der Magneten 3 des Rotorelements wechseln sich ab, so dass eine Drehbewegung 4a des magnetlosen Laufrades/des Gegenelements eine gleichgerichtete Drehbewegung in Richtung 4b des Rotorelements 2 bewirkt.

Der Pfeil 5 zeigt die Richtung der Magnetfeldlinien ausgehend von dem Magneten 3 an, der in der dichtesten Näherungsposition zur Seitenfläche 1.1 der Felge 1 ist.

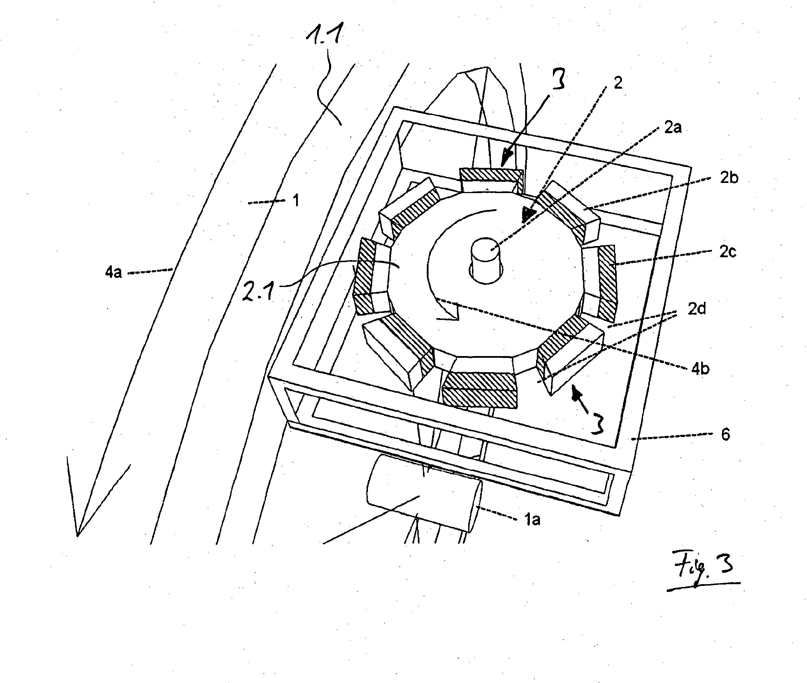

Im Ausführungsbeispiel nach Fig. 3 ist eine gerade Anzahl von Magneten 3 in Umfangsrichtung und des Trägerelements 2.1 beabstandet voneinander angeordnet. Durch die zwischen den nebeneinander befindlichen Magneten angeordneten Lücken ist ein auf die Seitenfläche 1.1 der Felge wirkendes Magnetfeld ungestörter ausbildbar.

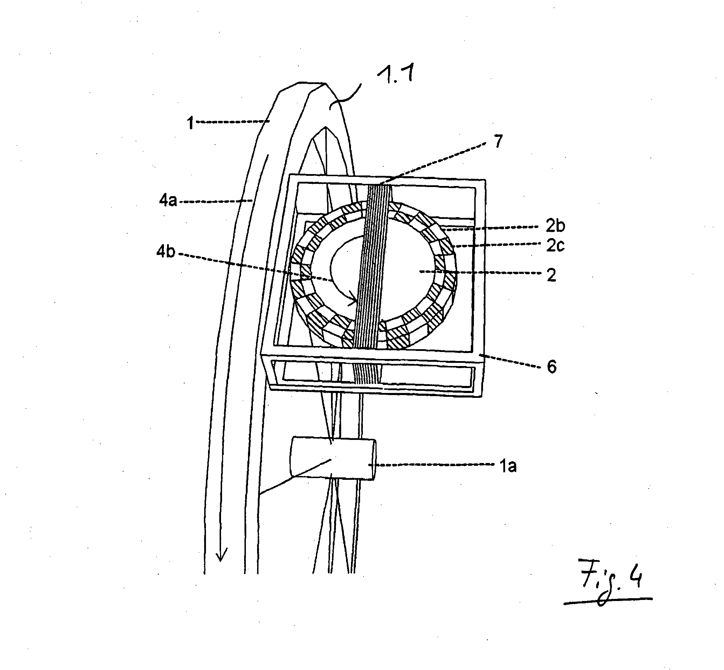

Fig. 4 zeigt den Gegenstand nach Fig. 1 mit zugehöriger Spule 7. Die Wicklungen der Spule 7 sind parallel zur durch die Seitenfläche 1.1 der Felge 1 bzw. des Gegenelements 1 ausgebildeten Ebene, so dass sich eine platzsparende Anordnung seitlich der Felge ergibt. Die Box 6 dient darüber hinaus als Aufnahme für die Achse 2a.

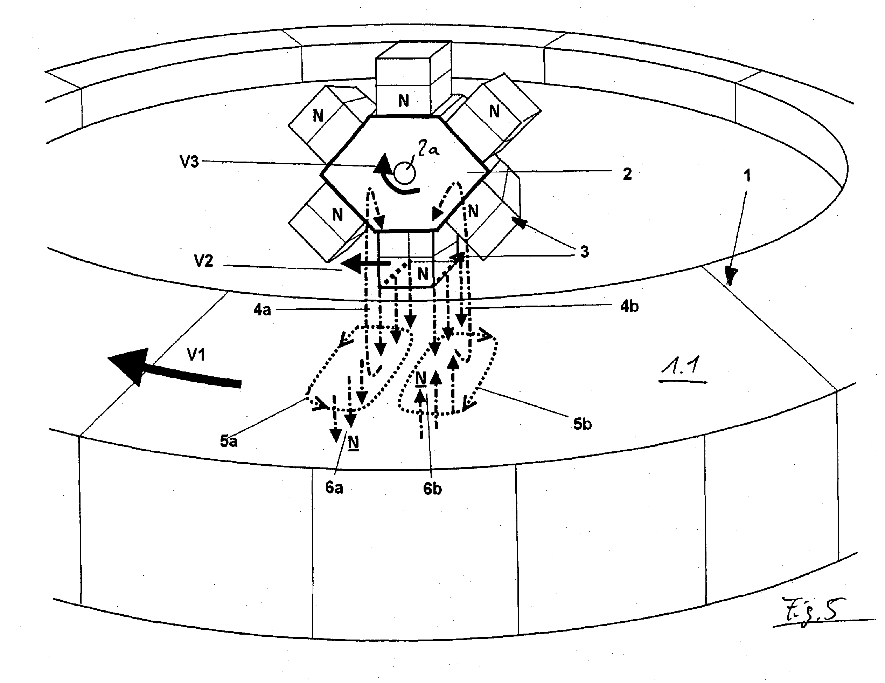

In der Prinzipskizze nach Fig. 5 ist das Gegenelement liegend dargestellt. Die Felge bewegt sich in Richtung V1. Das Rotorelement 2 ist mit Permanentmagneten 3 mit abwechselnden Polaritäten besetzt und verläuft über einen Luftspalt tangential an der Seite 1.1. Die Magnetfeldlinien 4a und 4b des Magneten, der am nächsten an dem Gegenelement 1 anliegt, durchdringen dieses und induzieren gegensätzlich verlaufende Wirbelstromfelder 5a und 5b mit resultierenden Magnetfeldern 6a und 6b. Das in Felgendrehrichtung vorne liegende Magnetfeld 6a übt eine magnetisch anziehende Wirkung und das in Drehrichtung hintere Magnetfeld 6b eine magnetisch abstoßende Wirkung auf den Magneten 3 aus, auf den somit in Richtung V2 eine Kraft ausgeübt wird. Dies resultiert in einer Drehbewegung in Richtung V3 des Rotorelements 2. Diese wird noch dadurch verstärkt, dass die benachbarten Magneten entgegengesetzte Polaritäten aufweisen und ebenfalls entsprechend in Drehrichtung abgestoßen bzw. angezogen werden.

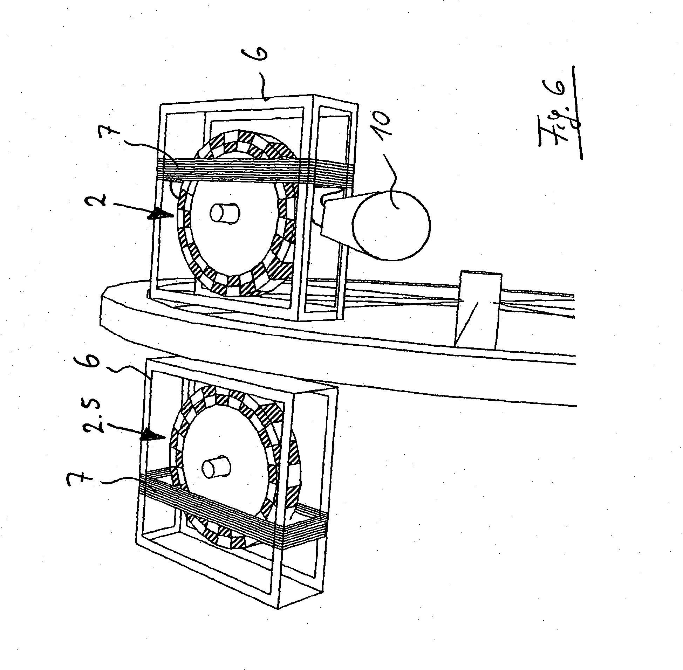

Eine erfindungsgemäße Vorrichtung mit zwei in magnetischer Wechselwirkung stehenden Rotorelementen 2 und 2.5 ist Fig. 6 zu entnehmen. Es erfolgt ein Zusammenschluss der beiden Magnetfelder der Rotorelemente, so dass das in der Mitte verlaufende Gegenelement sich in einem verstärkten Magnetfeld befindet und ein größerer Abstand zur Felge möglich ist. Idealerweise haben beide Rotorelemente parallele Drehachsen und einen identischen Aufbau, insbesondere gleichen Durchmesser, gleiche Magnetgrößen und gleiche Anzahl von Magneten. Der aus den Wicklungen der Spulen 7 abnehmbare Strom dient zum Betrieb eines Leuchtmittels 10.

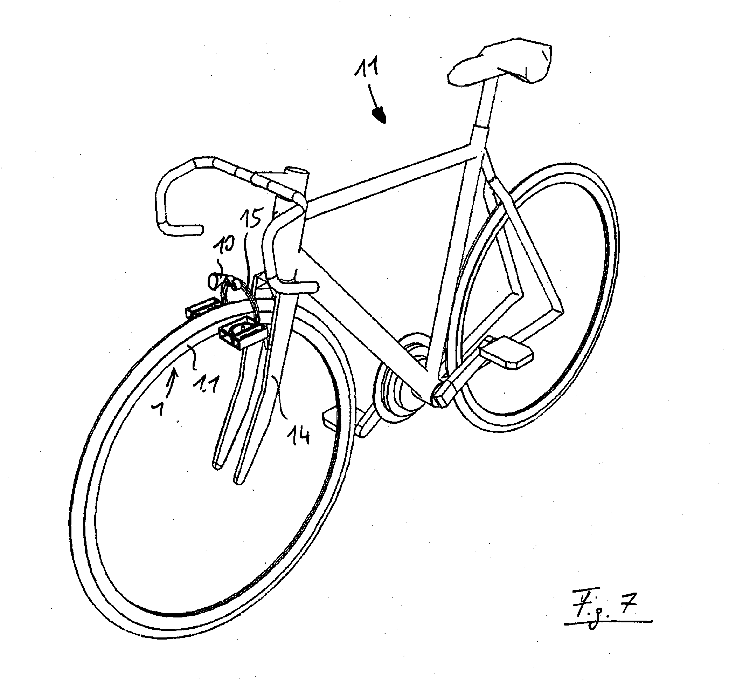

Gemäß dem Ausführungsbeispiel der Fig. 7 sind zwei Vorrichtungen an einer Felge 1 angeordnet und dienen dem Betrieb eines Leuchtmittels 10 des erfindungsgemäßen Fahrrads 11. Während das Leuchtmittel an einem Bügel 15 an der Bremsaufnahme angeordnet ist, sind die Gehäuse 6 mit Rotorelement und Spule an einer Gabel 14 befestigt.

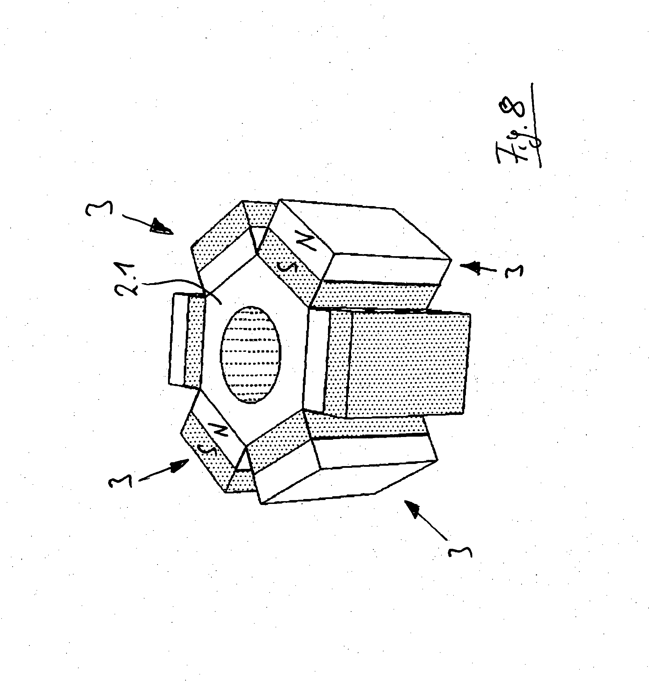

Ein optimiertes Rotorelement ist teilweise der Fig. 8 zu entnehmen. Ein im Schnitt sechskantförmiges Trägerelement 2.1 weist auf seinen sechs Umfangsflächen insgesamt sechs flach ausgebildete Magnete 3 auf. Am äußersten Umfangsbereich sind die Magnete beabstandet voneinander, so dass die magnetischen Feldlinien sich einigermaßen ungestört ausbreiten können. Die auf einer die Drehachse senkrecht schneidenden Achse liegenden Geraden befindlichen Magnete sind mit identischen Nord-Süd-Ausrichtungen versehen, so dass die in die Spule induzierte Spannung maximal wird.

Im Minimum beträgt der Abstand der Magneten von den Wicklungen der Spule typischerweise 0,5 mm. Bei einer einfachen Spulenwicklung (beispielsweise Fig. 4) und einem Durchmesser des Kupferdrahtes von 0,5 mm für die Wicklungen, sowie bei 60 Windungen und einer Gesamtlänge von ca. 6 m wird bei einer Geschwindigkeit von 20 km/h eine Stromstärke von 0,4 A bei 3 V Spannung erzeugt. Dies gibt eine Leistung von 1,2 W bei einer hiermit einhergehenden Bremswirkung von ca. 2 W. Diese Bremswirkung ist somit vernachlässigbar und deutlich niedriger als im Stand der Technik bekannt. Gleichzeitig ist die Energieausbeute deutlich höher. Bei Verwendung hocheffizienter LED erreicht man mit einer solchen Leistung eine Lichtmenge von mehr als 140 Lumen, womit man die Mindestvorgaben der Straßenverkehrsordnung um ein Vielfaches übertrifft.

Eine ausreichende Magnetstärke für ein geringer dimensioniertes Licht, das noch über den Vorgaben der Straßenverkehrsordnung liegt, lässt sich mit Magneten erreichen, deren Feldstärke schwächer ist als die für das vorbeschriebene Ausführungsbeispiel verwendeten, d.h. deren Magnetstärke zwischen 860 kA/m und 950 kA/m liegt. Bei einer Haftkraft von rund 600 g und einem Magneten in Quaderform und einer Größe von 10 x 10 x 1 mm kann schon bei einer Stromstärke von 0,1 A und einer 2 V Spannung bei 20 km/h eine Lichtmenge erzeugt werden, die den Vorgaben entspricht.

Für Rücklichter mit noch geringerem Lichtbedarf reichen z.B. ebenfalls Neodyn-Magnete einer Größe von 5 x 4 x 1 mm aus, die eine Haftkraft von 350 g und noch 0,5 A Strom bzw. 0,5 V bei einer entsprechenden Spule erzeugen. Hierbei kann sich eine dünne Spule (0,2 mm oder 0,3 mm Durchmesser) positiv auswirken, da mit steigendem Innenwiderstand der Spule eine höhere Spannung zu erzielen ist.

Ein Aufleuchten des Rücklichts oder auch des Vorderlichts bei der Betätigung der Bremse ist insbesondere abhängig von der Übersetzung und dem Schlupf des Systems. Je kleiner das Rotorelement ist, desto größer ist der Beschleunigungseffekt bei einer Abstandsänderung um einen bestimmten Wert. Zum Beispiel bewirkt eine Verringerung des Felgenabstands von 5 mm auf 1 mm bei einem Rotorelement mit 4 mm Radius eine Verringerung des effektiven Rotorelement-Radius von 9 mm auf 5 mm und damit eine Verringerung des Umfangs von rund 56 mm auf ca. 31 mm. Hiermit geht fast eine Verdopplung der Umdrehungszahl einher und in etwa auch eine Verdopplung des erzeugten Stroms. Bei einem für das Vorderlicht sinnvollen Rotorelement mit einem Radius von 15 mm verringert sich hingegen bei einer Verringerung des Felgenabstands von 5 mm auf 1 mm der effektive Radius von 20 mm auf 16 mm. Die prozentuale Änderung beim Bremsvorgang fällt somit deutlich niedriger aus und es ist ein geringerer Unterschied in der erhöhten Lichtstärke zu beobachten.

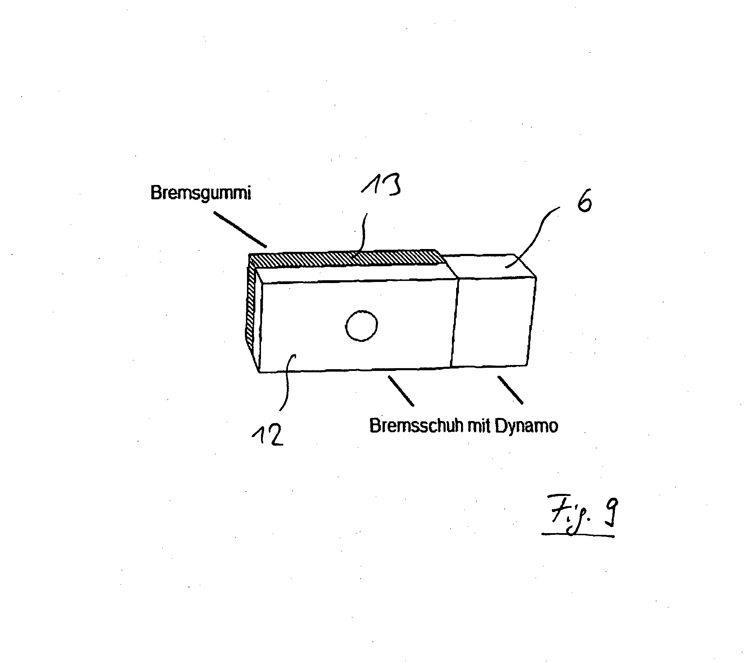

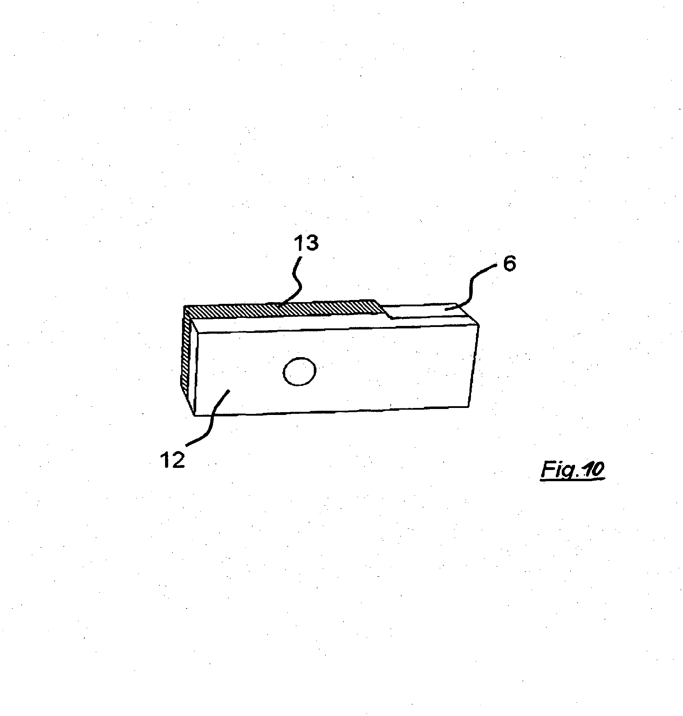

Fig. 9 zeigt eine nicht weiter detaillierte Vorrichtung, in der nur die Box 6 zu erkennen ist, in der das Rotorelement untergebracht ist. Diese Box 6 ist an einer Bremsklotzaufnahme 12 angeordnet, an der auch ein Bremsgummi 13 angeordnet ist. Wie vorbeschrieben, leuchtet das Leuchtmittel einer erfindungsgemäßen Fahrradbeleuchtungsanlage stärker auf, wenn gebremst wird. Fig. 10 veranschaulicht eine Variation des teilweisen Ausführungsbeispiels nach Fig. 9, bei der -veranschaulicht durch den Pfeil- Teile der Box 6 innerhalb eines zum Bremsschuh gehörenden Teils 12 der Bremse angeordnet sind.

## Patentansprüche

1. Vorrichtung zur berührungslosen Stromerzeugung, nämlich Fahrraddynamo, an einem drehbaren Gegenelement in Form einer Radfelge, mit zumindest einem bewegbar gelagerten, wenigstens einen Magneten (3) aufweisenden Rotorelement (2), und zumindest einer Spule (7), in deren wenigstens einer Wicklung durch den mit dem Rotorelement (2) bewegten Magneten (3) ein Strom induzierbar ist, der zum Betrieb eines Verbrauchers verwendbar ist, wobei das Rotorelement (2) durch magnetische Wechselwirkung mit dem Gegenelement (1) bewegbar ist, **dadurch gekennzeichnet, dass** das Rotorelement (2) und das Gegenelement (1) unterschiedliche Achsenverläufe aufweisen und das Rotorelement (2) in einer Wirkposition zur Erzeugung zumindest eines wirbelstrombasierten Magnetfelds (6a,6b) in dem eine ununterbrochene Kreisbahn ausbildenden und leitfähigen Gegenelement (1) ausgebildet ist, dergestalt, dass durch kontinuierliche Relativbewegung zwischen Gegenelement (2) und Rotorelement (1) kontinuierlich zueinander gegenläufige Wirbelstromfelder mit zueinander gegenpoligen Magnetfeldern (6a,6b) in m Gegenelement induziert werden und so das Rotorelement (2) unter Ausbildung eines Wirbelstromgetriebes mit dem Gegenelement (1) bewegt wird.

2. Vorrichtung nach Anspruch 1, **dadurch gekennzeichnet, dass** als Gegenelement (1) eine insbesondere im Wesentlichen aus Aluminium, Stahl oder einem leitfähigen Kunststoffmaterial bestehende Felge eines Fahrradreifens verwendbar ist.

3. Vorrichtung nach Anspruch 1 oder 2, **dadurch gekennzeichnet, dass** das Rotorelement (1) eine Mehrzahl von Magneten (3), insbesondere zumindest 6 Magnete aufweist.

4. Vorrichtung nach Anspruch 3, **dadurch gekennzeichnet, dass** die Magneten (3) entlang eines Umfangs des Rotorelements (1) mit abwechselnden Polaritäten angeordnet sind.

5. Vorrichtung nach einem der vorherigen Ansprüche mit einem Rotorelement mit einer Mehrzahl von Magneten (3), **dadurch gekennzeichnet, dass** das Rotorelement (1) rotierbar gelagert und die Magnete (3) mit ihrer Nord-Süd-Ausrichtung radial zur Drehachse angeordnet sind.

6. Vorrichtung nach Anspruch 5, **dadurch gekennzeichnet, dass** die Magnete (3) beabstandet voneinander und insbesondere regelmäßig entlang des Umfangs eines Trägerelements (2.1) verteilt sind.

7. Vorrichtung nach einem der vorherigen Ansprüche, **dadurch gekennzeichnet, dass** zwei erfindungsgemäße Rotorelemente (2 und 2.5) an gegenüberliegenden Seiten des Metallrades in einer sich wechselseitig verstärkenden magnetischen Wirkposition angebracht sind.

8. Vorrichtung nach einem der vorherigen Ansprüche, **dadurch gekennzeichnet, dass** die Wicklung Teil eines von dem Rotorelement (2) antreibbaren Generators ist.

9. Vorrichtung nach einem Ansprüche 1 bis 7, **dadurch gekennzeichnet, dass** die Wicklung der Spule um das Rotorelement (2) vollständig herum führt und insbesondere Wicklung und Rotorelement (2) gemeinsam in einem Gehäuse (6) gekapselt sind.

10. Vorrichtung nach Anspruch 9 mit einer weiteren Wicklung, **dadurch gekennzeichnet, dass** die Wicklungen gegeneinander angewinkelt sind und beide um das Rotorelement herumführen.

11. Vorrichtung nach einem der vorherigen Ansprüche, **gekennzeichnet durch** einen insbesondere als Kondensator oder Akkumulator ausgebildeten Energiespeicher, wobei die Vorrichtung zur Speicherung von elektrischer Energie während des Betriebs der Vorrichtung und zur nachfolgenden Abgabe der Energie ausgebildet ist.

12. Fahrradbeleuchtungsanlage, um-fassend eine Vorrichtung nach einem der vorherigen Ansprüche sowie zumindest ein mit der Spule (7) leitungsmäßig verbundenes Leuchtmittel (10).

13. Fahrradbeleuchtungsanlage nach Anspruch 12, **dadurch gekennzeichnet, dass** das/wenigstens ein Leuchtmittel (10) an einem/dem insbesondere die Spule (7) einfassenden Gehäuse (6) der Vorrichtung angeordnet ist.

14. Fahrradbeleuchtungsanlage nach Anspruch 12 oder 13, mit zwei Leuchtmitteln (10), **dadurch gekennzeichnet, dass** die insbesondere wenigstens eine Diode um-fassenden Leuchtmittel (10) in separaten Stromkreisen mit unterschiedlichen Durchlassrichtungen angeordnet sind, dergestalt, dass die Stromkreise bei einem vom Rotorelement (2) in der Spule (7) induzierten Wechselstrom abwechselnd beaufschlagt sind.

15. Fahrradbeleuchtungsanlage nach Anspruch 12 oder 13, **gekennzeichnet durch** einen der Spule (7) nachgeschalteten Gleichrichter, der den Strom der Spule (7) gleichrichtet.

16. Fahrradbeleuchtungsanlage nach einem der Ansprüche 12 bis 15, **gekennzeichnet durch** eine Trageinheit, **durch** die der Abstand des Rotorelements (2) zum Gegenelement (1) variierbar ist, insbesondere **durch** Verschiebung der Trageinheit innerhalb einer Außenhülle der Fahrzeugbeleuchtungsanlage.

17. Fahrrad, **gekennzeichnet durch** eine Fahrzeugbeleuchtungsanlage nach einem der Ansprüche 12 bis 16.

18. Fahrrad nach Anspruch 17, **dadurch gekennzeichnet, dass** die Vorrichtung zur Stromerzeugung an einer Gabel (14) angeordnet ist.

19. Fahrrad nach Anspruch 18, **dadurch gekennzeichnet, dass** die Vorrichtung zur Stromerzeugung an einer Bremse des Fahrrads angeordnet ist, insbesondere dergestalt, durch die Annäherung des Rotorelements (2) an die Felge (1) während einer Betätigung der Bremse der in der Spule (7) induzierte Strom unter Verstärkung der Licht-leistung vergrößert wird.

20. Fahrrad nach Anspruch 19, **dadurch gekennzeichnet, dass** die Vorrichtung zusätzlich zum Bremsklotz (13) an der Bremsklotzaufnahme (12) befestigt ist.

21. Fahrrad nach Anspruch 19 oder 20, **dadurch gekennzeichnet, dass** die Vorrichtung zur Stromerzeugung am Bremsschuh oder innerhalb des Bremsschuhs (12) an-geordnet ist.

22. Fahrrad nach Anspruch 17, **dadurch gekennzeichnet, dass** die Vorrichtung zur Stromerzeugung am Befestigungssockel einer Cantilever- oder V-Brake-Bremse befestigt ist.

## Claims

1. Device for contactless current generation, specifically a bicycle dynamo, on a rotatable counter element in the form of a wheel rim, said device comprising at least one movably mounted rotor element (2) having at least one magnet (3), and comprising at least one coil (7) in which a current can be induced in at least one winding thereof by the magnet (3) which is moved by the rotor element (2), which current can be used to operate a consumer, the rotor element (2) being movable by magnetic interaction with the counter element (1), **characterised in that** the rotor element (2) and the counter element (1) have different axes and, in an operative position, the rotor element (2) is configured to generate at least one eddy-current-based magnetic field (6a, 6b) in which a conductive counter element (1), which forms an uninterrupted circular path, is formed such that by means of continuous relative movement between the counter element (2) and the rotor element (1), eddy current fields, which rotate continuously counter to one another and have magnetic fields (6a, 6b) having opposing poles, are induced in the counter element and the rotor element (2) is thus moved together with the counter element (1) to form an eddy current gearing.

2. Device according to claim 1, **characterised in that** a rim of a bicycle tyre, which rim consists in particular substantially of aluminium, steel, or a conductive plastics material, can be used as the counter element (1).

3. Device according to either claim 1 or claim 2, **characterised in that** the rotor element (1) comprises a plurality of magnets (3), in particular at least 6 magnets.

4. Device according to claim 3, **characterised in that** the magnets (3) are arranged having alternating polarities over a circumference of the rotor element (1).

5. Device according to any of the preceding claims, comprising a rotor element having a plurality of magnets (3), **characterised in that** the rotor element (1) is rotatably mounted, and the magnets are arranged, by the north-south orientation thereof, radially with respect to the axis of rotation.

6. Device according to claim 5, **characterised in that** the magnets (3) are distributed so as to be spaced apart, in particular regularly, over the circumference of a carrier element (2.1).

7. Device according to any of the preceding claims, **characterised in that** two rotor elements (2 and 2.5) according to the invention are mounted on opposite sides of the metal wheel in a mutually reinforcing magnetic active position.

8. Device according to any of the preceding claims, **characterised in that** the winding is part of a generator which can be driven by the rotor element (2).

9. Device according to any of claims 1 to 7, **characterised in that** the winding of the coil leads completely around the rotor element (2), and in particular the winding and the rotor element (2) are encapsulated together in a housing (6).

10. Device according to claim 9 comprising a further winding, **characterised in that** the windings are angled relative to each other and both lead around the rotor element.

11. Device according to any of the preceding claims, **characterised by** an energy storage means, in particular in the form of a capacitor or an accumulator, the device being configured to store electrical energy during operation thereof and to subsequently release the energy.

12. Bicycle lighting system, comprising a device according to any of the preceding claims and at least one lamp (10) which is conductively connected to the coil (7).

13. Bicycle lighting system according to claim 12, **characterised in that** the/at least one lamp (10) is arranged on a/the housing (6) of the device which surrounds in particular the coil (7).

14. Bicycle lighting system according to either claim 12 or claim 13, comprising two lamps (10), **characterised in that** the lamps (10), which comprise in particular at least one diode, are arranged in separate circuits having different forward conducting directions such that an alternating current induced by the rotor element (2) in the coil (7) is applied to the circuits in an alternating manner.

15. Bicycle lighting system according to either claim 12 or claim 13, **characterised by** a rectifier which is connected downstream of the coil (7) and rectifies the current of the coil (7).

16. Bicycle lighting system according to any of claims 12 to 15, **characterised by** a carrier unit by means of which the distance between the rotor element (2) and the counter element (1) can be varied, in particular by displacing the carrier unit inside an outer shell of the bicycle lighting system.

17. Bicycle, **characterised by** a bicycle lighting system according to any of claims 12 to 16.

18. Bicycle according to claim 17, **characterised in that** the device for current generation is arranged on a fork (14).

19. Bicycle according to claim 18, **characterised in that** the device for current generation is arranged on a brake of the bicycle, in particular such that the current induced in the coil (7) is increased, while intensifying the light output, by the rotor element (2) approaching the rim (1) during actuation of the brake.

20. Bicycle according to claim 19, **characterised in that** the device is attached to the brake block holder (12) in addition to the brake block (13).

21. Bicycle according to either claim 19 or claim 20, **characterised in that** the device for current generation is arranged on the brake shoe or inside the brake shoe (12).

22. Bicycle according to claim 17, **characterised in that** the device for current generation is attached to the mounting base of a cantilever brake or V-brake.

## Revendications

1. Dispositif de production d'électricité sans contact, notamment une dynamo de bicyclette, sur un élément opposé rotatif sous forme de jante de roue, avec au moins un élément de rotor (2) monté mobile et présentant au moins un aimant (3), et au moins une bobine (7) dans au moins un enroulement de laquelle un courant peut être induit par l'aimant (3) déplacé par l'élément de rotor (2) et utilisé pour actionner une charge, dans lequel l'élément de rotor (2) peut être déplacé par interaction magnétique avec l'élément opposé (1), **caractérisé en ce que** l'élément de rotor (2) et l'élément opposé (1) présentent des tracés d'axe différents et l'élément de rotor (2) est réalisé dans une position active pour produire au moins un champ magnétique (6a, 6b) à base de courants de Foucault dans l'élément opposé (1) conducteur et réalisant une trajectoire circulaire ininterrompue, de telle sorte que par un mouvement relatif continu entre l'élément opposé (2) et l'élément de rotor (1), des champs de courants de Foucault de sens mutuellement opposé de manière continue sont induits dans l'élément opposé avec des champs magnétiques (6a, 6b) de polarité mutuellement opposée, et l'élément de rotor (2) est ainsi déplacé en réalisant un engrenage à courants de Foucault avec l'élément opposé (1).

2. Dispositif selon la revendication 1, **caractérisé en ce qu'**une jante d'un pneu de bicyclette, composée en particulier substantiellement d'aluminium, d'acier ou d'une matière plastique conductrice, est utilisable comme élément opposé (1).

3. Dispositif selon la revendication 1 ou 2, **caractérisé en ce que** l'élément de rotor (1) présente une pluralité d'aimants (3), en particulier au moins 6 aimants.

4. Dispositif selon la revendication 3, **caractérisé en ce que** les aimants (3) sont disposés suivant une circonférence de l'élément de rotor (1) avec des polarités alternatives.

5. Dispositif selon l'une quelconque des revendications précédentes, comprenant un élément de rotor avec une pluralité d'aimants (3), **caractérisé en ce que** l'élément de rotor (1) est monté rotatif et les aimants (3) sont disposés par leur orientation nord/sud radialement par rapport à l'axe de rotation.

6. Dispositif selon la revendication 5, **caractérisé en ce que** les aimants (3) sont répartis en étant espacés les uns des autres, et en particulier régulièrement suivant la circonférence d'un élément de support (2.1).

7. Dispositif selon l'une quelconque des revendications précédentes, **caractérisé en ce que** deux éléments de rotor selon l'invention (2 et 2.5) sont fixés sur des côtés opposés de la roue métallique dans une position active magnétique en se renforçant mutuellement.

8. Dispositif selon l'une quelconque des revendications précédentes, **caractérisé en ce que** l'enroulement fait partie d'un générateur pouvant être entraîné par l'élément de rotor (2).

9. Dispositif selon l'une quelconque des revendications 1 à 7, **caractérisé en ce que** l'enroulement de la bobine passe complètement autour de l'élément de rotor (2) et **en ce qu'**en particulier l'enroulement et l'élément de rotor (2) sont encapsulés ensemble dans un boîtier (6).

10. Dispositif selon la revendication 9, comprenant un enroulement supplémentaire, **caractérisé en ce que** les enroulements forment un angle l'un par rapport à l'autre et **en ce que** les deux passent autour de l'élément de rotor.

11. Dispositif selon l'une quelconque des revendications précédentes, **caractérisé par** un réservoir d'énergie réalisé en particulier sous forme de condensateur ou accumulateur, dans lequel le dispositif est réalisé pour stocker de l'énergie électrique pendant le fonctionnement du dispositif et pour ensuite libérer l'énergie.

12. Système d'éclairage de bicyclette, comprenant un dispositif selon l'une quelconque des revendications précédentes ainsi qu'au moins un agent lumineux (10) relié de manière filaire à la bobine (7).

13. Système d'éclairage de bicyclette selon la revendication 12, **caractérisé en ce que** ledit ou au moins un agent lumineux (10) est disposé sur un boîtier (6) du dispositif, en particulier ledit boîtier enfermant la bobine (7).

14. Système d'éclairage de bicyclette selon la revendication 12 ou 13, comprenant deux agents lumineux (10), **caractérisé en ce que** lesdits agents lumineux (10), comprenant en particulier au moins une diode, sont disposés dans des circuits électriques séparés avec des sens de conduction différents, de telle sorte que lorsqu'un courant alternatif est induit dans la bobine (7) par l'élément de rotor (2), les circuits électriques sont sollicités alternativement.

15. Système d'éclairage de bicyclette selon la revendication 12 ou 13, **caractérisé par** un redresseur placé en aval de la bobine (7) et redressant le courant de la bobine (7).

16. Système d'éclairage de bicyclette selon l'une quelconque des revendications 12 à 15, **caractérisé par** une unité de support permettant de faire varier la distance entre l'élément de rotor (2) et l'élément opposé (1), en particulier par un déplacement de l'unité de support à l'intérieur d'une enveloppe extérieure du système d'éclairage de bicyclette.

17. Bicyclette, **caractérisée par** un système d'éclairage de bicyclette selon l'une quelconque des revendications 12 à 16.

18. Bicyclette selon la revendication 17, **caractérisée en ce que** le dispositif de production d'électricité est disposé au niveau d'une fourche (14).

19. Bicyclette selon la revendication 18, **caractérisée en ce que** le dispositif de production d'électricité est disposé au niveau d'un frein de la bicyclette, en particulier de telle sorte que le courant induit dans la bobine (7) en rapprochant l'élément de rotor (2) de la jante (1) pendant un actionnement du frein est augmenté tout en renforçant le rendement lumineux.

20. Bicyclette selon la revendication 19, **caractérisée en ce qu'**en plus du patin de frein (13), le dispositif est fixé au logement de patin de frein (12).

21. Bicyclette selon la revendication 19 ou 20, **caractérisée en ce que** le dispositif de production d'électricité est disposé sur le patin de frein ou à l'intérieur du patin de frein (12).

22. Bicyclette selon la revendication 17, **caractérisée en ce que** le dispositif de production d'électricité est fixé à la base de fixation d'un frein Cantilever ou d'un frein V-brake.
